# EUROPÄISCHE PATENTSCHRIFT

(11) **EP 0 981 008 B1**
(45) Veröffentlichungstag und Bekanntmachung des Hinweises auf die Patenterteilung: **08.10.2003**
(21) Anmeldenummer: 99109586.0
(22) Anmeldetag: 14.05.1999
(51) Int. Cl.: F16N 25/02

(54) **Schmiermittelverteiler**
Oil distributor
Repartiteur d'huile

(30) Priorität: 19.08.1998 DE 19837456
(43) Veröffentlichungstag der Anmeldung: 23.02.2000
(73) Patentinhaber: Lincoln GmbH, D-69190 Walldorf (DE)
(72) Erfinder: Zdravko, Paluncic Dr.-Ing., 67067 Ludwigshafen (DE)
(74) Vertreter: KEIL & SCHAAFHAUSEN

(56) Entgegenhaltungen:
- EP-A- 0 313 821
- DE-A- 2 435 018
- GB-A- 1 160 336
- GB-A- 1 265 947

## Beschreibung

Die Erfindung bezieht sich auf einen Schmiermittelverteiler für Einleitungs-Zentralschmieranlagen für die Dosierung von Schmierölen nach dem Oberbegriff des Anspruchs 1.

Aus der GB-A 1,160,336 ist ein Schmiermittelverteiler für Zweileitungs-Zentralschmieranlagen für die Dosierung von Schmierölen bekannt, mit wenigstens einem Verteilerblock und vier Verteilerelementen mit einem Gehäuse mit einem Verteilereinlass für den Anschluss einer Pumpendruckleitung und einem Verteilerauslass für den Anschluss einer Schmierstellendruckleitung, bei dem die Gehäuseverteilerelemente gemeinsam von dem Verteilerblock gebildet sind und sich die Verteilerauslässe der Verteilerelemente in Auslassöffnungen in ein und derselben Seite des Verteilerblockes münden, mit welcher der Verteilerblock unter Abdichtung der Schmiermittelübergänge an einer Grundplatte mit den Auslassöffnungen zugeordneten Schmierstellendruckleitungen anliegend befestigbar ist, wobei eine Einlassöffnung eines Schmiermittelzufuhrkanals für Verteilerelemente in derselben Seite des Verteilerblockes liegt wie die Auslassöffnungen der Verteilerelemente und die Grundplatte mit einer zugeordneten Pumpendruckleitung ausgestattet ist.

Aufgabe der vorliegenden Erfindung ist es, einen Schmiermittelverteiler zu schaffen, welcher bei einfacher und schneller Montage und Demontage den Einsatz einer großen Anzahl von wirksamen Verteilerelementen für Einleitungsschmieranlagen möglich macht.

Diese Aufgabe wird mit den Merkmalen des Anspruchs 1 gelöst.

Bei einer solchen Einleitungs-Zentralschmieranlage baut eine Zentralschmierpumpe den Öldruck in einer Hauptleitung auf. Sobald der Öldruck am Einlass des Verteilerelements einen vorgegebenen Druck überschreitet, wird ein Förderkolben aufgrund des Arbeitsdruckes betätigt. Der Förderkolben drängt das von dem vorhergehenden Zyklus in einer Zuteilkammer vorhandene Öl unter Druck zu einem Auslass des Verteilerelements in eine Schmierstellenleitung zur Schmierstelle, wobei ein Rückschlagventil unter Druck den Durchgang zum Auslass freigibt. Wenn der Förderkolben seinen Hub abgeschlossen hat, ist die dosierte Ölmenge aus der Zuteilkammer zum Auslass verdrängt. Danach erfolgt eine Druckentlastung der Hauptleitung zwischen Pumpe und Verteilerelement. Wenn der Öldruck an dem Einlass des Verteilerelementes unter einen vorgegebenen Wert gefallen ist, wird der Förderkolben mittels einer Druckfeder in seine Ausgangsstellung zurückgeschoben. Das Rückschlagventil verhindert, dass Öl von dem Auslass in die Zuteilkammer zurückströmen kann. In einem Verteilerblock oder einem Verteilerteilblock kann so eine beliebig große Anzahl dieser Verteilerelemente zusammengefasst und als Einheit in kurzer Zeit montiert und demontiert werden. Auf diese Weise braucht die Funktion einer Einleitungs-Zentralschmieranlage im Falle des Defektes eines Verteilerelements nur kurzzeitig unterbrochen zu werden, da der Verteilerblock oder Verteilerteilblock, in welchem das defekte Verteilerelement u. a. gebildet ist, schnell ausgewechselt werden kann. Die Befestigung des Verteilerblocks bzw. mehrerer Verteilerblöcke kann bspw. mit Hilfe von je zwei Schrauben erfolgen. Die einander zugewandten Seiten von Verteilerblock und Grundplatte sind vorzugsweise eben, sie können jedoch zur richtigen Positionierung, so dass die Verteilerauslässe und die zugeordneten Schmierstellen Druckleitungen zuverlässig zueinander ausgerichtet sind, Positionier- bzw. Zentriervor- und/oder -rücksprünge aufweisen.

In Weiterbildung des Erfindungsgedankens kann auch eine Einlassöffnung eines vorzugsweise allen Verteilerelementen des Verteilerblocks gemeinsamen Schmiermittelzufuhrkanals für die in dem Verteilerblock als gemeinsames Gehäuse integrierten Verteilerelemente in derselben Seite des Verteilerblocks liegen wie die Auslassöffnungen der Verteilerelemente. Die Grundplatte ist in diesem Falle mit einer zugeordneten Pumpendruckleitung ausgestattet. Mit dem Befestigen des Verteilerblocks an der Grundplatte werden auf diese Weise nicht nur die Verbindungen zwischen den Verteilerauslässen und den Schmierstellendruckleitungen sondern auch die Verbindung der Verteilereinlässe mit der Pumpendruckleitung hergestellt, so dass es einer besonderen Anschlussmontage der Pumpendruckleitung nicht bedarf.

Vorteilhafterweise sind die Schmierstellendruckleitungen und/oder die in der Regel einzige Pumpendruckleitung als Durchgangskanäle bzw. Durchgangskanal der Grundplatte ausgebildet.

Dabei ist die erste Bohrung vorzugsweise als Durchgangsbohrung ausgebildet, wobei die Durchgangsbohrungen der Anzahl von Verteilerelementen parallel zueinander und parallel zu der die Auslassöffnungen aufweisenden Seite des Verteilerblocks liegen können.

Bei einem Schmiermittelverteiler, bei welchem jedes Verteilerelement eine Dosierkammer mit einer Durchgangsöffnung zu der Zuteilkammer und einen die Dosierkammer einseitig begrenzenden Dosierkolben aufweist, welcher unter dem in einer Förderkammer des Förderkolbens herrschenden Arbeitsdrucks des Schmiermittels gegen die Wirkung einer Rückstellfeder elastisch ausweicht, ist vorteilhafterweise zur weiteren Vereinfachung der Herstellung und Realisierung der einzelnen Verteilerelemente in dem Verteilerblock bzw. Verteilerteilblock die Durchgangsöffnung, die Dosierkammer und
der Dosierkolben von einer ggf. abgestuften zweiten Bohrung des Verteilerblocks gebildet bzw. aufgenommen. Sobald der Förderkolben eine Durchgangsöffnung zu einer Dosierkammer überfahren hat, wird die Dosierkammer unter Druck mit Öl aufgefüllt. Der Hub eines die Dosierkammer begrenzenden Dosierkolbens kann mit Hilfe einer Einstellkappe des Verteilerelements begrenzt werden. Sobald der Förderkolben die Durchgangsöffnung zu der Dosierkammer freigegeben hat, verdrängt der federbelastete Dosierkolben die dosierte Ölmenge in die Zuteilkammer.

Dabei ist die zweite Bohrung vorteilhafterweise als Querbohrung zu der ersten Bohrung ausgebildet.

Femer kann die zweite Bohrung von der der die Auslassöffnungen aufweisenden Seite gegenüberliegenden Seite in den Verteilerblock führen. Auf diese Weise sind von dem Dosierkolben betätigte Kontrollstifte nebeneinander auf der äußeren Stirnseite des Verteilerblocks gut erkennbar, so dass auch bei einer großen Anzahl von Verteilerelementen der Defekt eines Verteilerelements leicht festgestellt werden kann. Bei dem Hub des Dosierkolbens fährt nämlich ein Kontrollstift aus und ermöglicht eine visuelle Kontrolle der Funktion des betreffenden Verteilerelements. Während der Dosierkolben die dosierte Ölmenge in die Zuteilkammer verdrängt, wird der Kontrollstift mit zurückgezogen. Damit wird angezeigt, dass das Verteilerelement danach wieder zur nächsten Abschmierung betriebsbereit ist.

Die Erfindung ermöglicht es ferner, dass mehrere gleiche oder unterschiedliche Verteilerblöcke auf ein und derselben Grundplatte angeordnet sind, so dass ein Schmiermittelverteiler auf einfache Weise an die herrschenden Betriebsbedingungen einer Einleitungs-Zentralschmieranlage angepasst werden kann.

Um die Möglichkeit der Überwachung der Funktion eines Verteilerelements zu erleichtern, ist der Kontrollstift, welcher von dem Dosierkolben nach außen schiebbar ist, nicht mit dem Dosierkolben gekoppelt; er ist vielmehr selbständig von Hand in seine innenliegende Position zurückschiebbar, wenn der Dosierkolben zurückgezogen ist.

Nachfolgend werden Ausführungsbeispiele der Erfindung anhand der Zeichnung näher erläutert.

Es zeigen:
- Fig. 1: einen die Erfindung aufweisenden Schmiermittelverteiler im Schnitt, sowie
- Fig. 2: eine Ansicht A des Schmiermittelverteilers von Fig. 1.

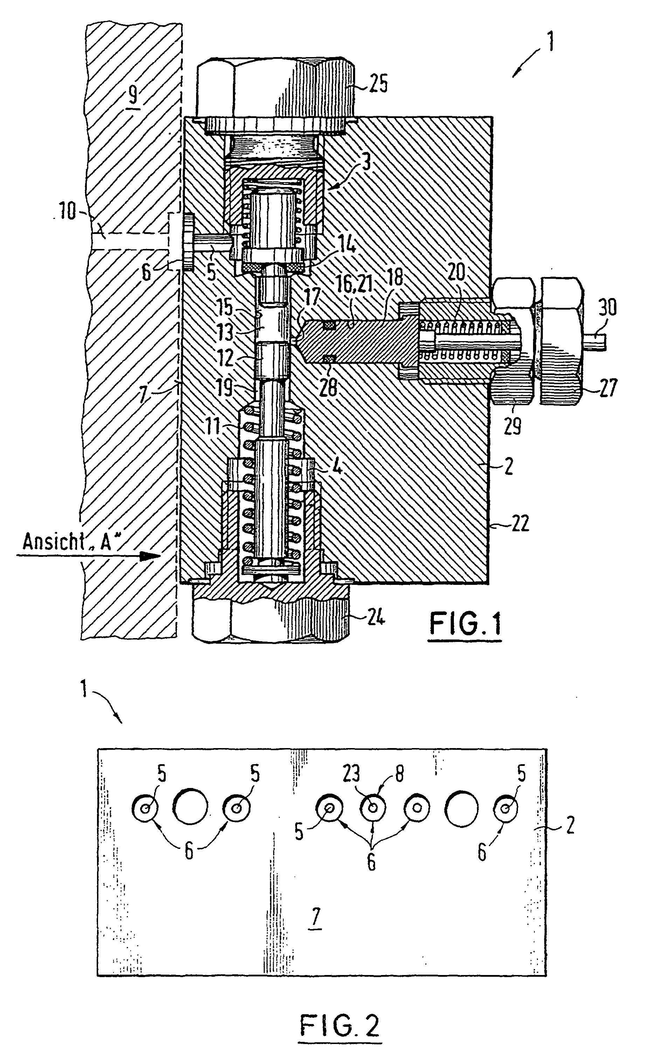

Der für Zentralschmieranlagen, insbesondere Einleitungs-Zentralschmieranlagen für die Dosierung von Schmierölen bestimmte Schmiermittelverteiler 1 gemäß den Fig. 1 und 2 weist einen Verteilerblock 2 und eine vorgegebene Anzahl von Verteilerelementen 3 für den Anschluß einer nicht gezeigten Pumpendruckleitung, welche jeweils in eine in dem Ventilblock 2 ausgebildete Einlasskammer 23 des Verteilerelements 3 mündet. Das von dem Verteilerblock 2 gebildete Gehäuse des Verteilerelements 3 weist ferner einen Verteilerauslass 5 für den Anschluss einer Schmierstellendruckleitung 10 auf. Die Gehäuse der z.T. großen Anzahl von bspw. in einer Reihe nebeneinander angeordneten Verteilerelementen 3 werden somit gemeinsam von dem Verteilerblock 2 gebildet. Dabei münden die Verteilerauslässe 5 der Anzahl von Verteilerelementen 3 sämtlich in Auslassöffnungen 6 in ein und derselben Seite 7 des Verteilerblocks 2. Mit dieser Seite 7 liegt der Verteilerblock 2 unter Abdichtung der Schmiermittelübergänge an einer Grundplatte 9 mit den Auslassöffnungen 6 zugeordneten Schmierstellendruckleitungen 10 an und ist so an der Grundplatte 9 befestigbar.

Eine Einlassöffnung 8 eines vorzugsweise allen Verteilerelementen 3 des Verteilerblocks 2 gemeinsamen Schmiermittelzufuhrkanals 23 für die in dem Verteilerblock 2 als gemeinsames Gehäuse integrierten Verteilerelemente liegt in derselben Seite 7 des Verteilerblocks 2 wie die Auslassöffnungen 6 der Verteilerelemente 3 (vgl. Fig. 2), wobei die Grundplatte 9 mit einer zugeordneten (nicht dargestellten) Pumpendruckleitung ausgestattet ist.

Die Schmierstellendruckleitungen 10 sind als Durchgangskanäle der Grundplatte 9 ausgebildet. Das gleiche kann (in nicht dargestellter Weise) für die wenigstens eine Pumpendruckleitung der Fall sein.

Das Verteilerelement 3 hat einen in der Einlasskammer 4 vorgesehenen, gegen die Wirkung einer Rückstellfeder 11 von dem Arbeitsdruck der Pumpendruckleitung betätigbaren Förderkolben 12, eine Zuteilkammer 13 für die an den Verteilerauslass 5 jeweils abzugebende Schmierstoffteilmenge und ein Rückschlagventil 14 zwischen der Zuteilkammer 13 und dem Verteilerauslass 5. Dabei sind bzw. ist der Förderkolben 12, die zustellkammer 13 und das Rückschlagventil 14 von einer ggf. abgestuften ersten Bohrung 15 des Verteilerblocks 2 aufgenommen bzw. gebildet. Die erste Bohrung 15 ist als Durchgangsbohrung ausgebildet, welche an den beiden Enden von Gewindemuttern 24, 25 verschlossen sind, welche in die an ihren Enden als Gewindebohrung ausgebildete erste Bohrung 15 eingeschraubt sind, und auf welchen sich von Innen einerseits die Rückstellfeder 11 des Förderkolbens 12 und andererseits die Rückstellfeder 26 des Rückschlagventils 14 abstützen. Man erkennt daraus, daß die jeweiligen Verteilerelemente 3 auf sehr einfache Weise in dem jeweiligen Verteilerblock 2 montiert werden können. Die Durchgangsbohrungen der Anzahl von Verteilerelementen 3 liegen dabei parallel zueinander und parallel zu der die Auslassöffnungen 6 aufweisenden Seite 7 des Verteilerblocks 2, so dass die Gewindemuttern 24, 25 gemäß der Darstellung in Fig. 1 auf der Unterseit und der Oberseite des Ventilblocks 2 liegen und die Montage des Verteilerblocks 2 an der Grundplatte 9 nicht behindern.

Das Verteilerelement 3 weist ferner eine Dosierkammer 16 mit einer Durchgangsöffnung 17 zu der Zuteilkammer 13 und einen die Dosierkammer 16 einseitig begrenzenden Dosierkolben 18 auf, welcher unter dem in einer Förderkammer 19 des Förderkolbens 12 herrschenden Arbeitsdruck des Schmiermittels gegen die Wirkung einer Rückstellfeder 20 elastisch ausweicht. Die Durchgangsöffnung 17, die Dosierkammer 16 und der Dosierkolben 18 sind bzw. ist von einer ggf. abgestuften zweiten Bohrung 21 des Verteilerblocks 2 gebildet bzw. aufgenommen, wobei die zweite Bohrung 21 als Querbohrung zu der ersten Bohrung 15 ausgebildet ist und über die Durchgangsöffnung 17 in die erste Bohrung 15 mündet. Die zweite Bohrung ist ebenfalls von einer Gewindemutter 27 verschlossen, welche in die an ihrem äußeren Ende als Gewindebohrung ausgebildete zweite Bohrung 21 eingeschraubt ist und auf deren Innenseite sich die Rückstellfeder 20 für den Dosierkolben 18 abstützt, welcher seinerseits über einen Dichtungsring 28 in dem inneren Abschnitt der zweiten Bohrung 21 geführt ist. Die Gewindemutter 27, welche mit ihrem inneren Ende als Anschlag für den Dosierkolben 18 wirkt, kann unterschiedlich weit in die zweite Bohrung 21 eingedreht und mittels einer Feststellmutter 29 arretiert werden. Auf diese Weise kann die Dosiermenge des Schmiermittels eingestellt werden. Der Dosierkolben 16 geht an seinem äußeren Ende in einen Kontrollstift 30 über, welcher mit seinem äußeren Ende aus der Gewindemutter 27 herausragt. Dadurch, daß die zweite Bohrung 21 von der der die Auslassöffnungen 6 aufweisenden Seite 7 gegenüberliegenden Seite 22 in den Ventilblock 2 führen, liegen die Kontrollstifte 30 sämtlicher nebeneinander in dem Ventilblock 2 vorgesehene Verteilerelemente 3 auf dieser äußeren stirnseitigen Seite 22 des Verteilerblocks 2, so dass auch bei einer großen Anzahl von Verteilerelementen 3 deren Funktion einfach überwacht werden kann.

In der Schmierphase ist die Zuteilkammer 13 von dem vorhergehenden Zyklus mit Schmiermittel, insbesondere Öl, gefüllt. Eine Zentralschmierpumpe baut den Öldruck in dem Schmiermittelzufuhrkanal 23 auf. Sobald der Öldruck an dem Verteilereinlass einen vorgegebenen Wert überschreitet, wird der Förderkolben 19 betätigt und gegen die Rückstellfeder 11 in der ersten Bohrung 15 in Richtung des Rückschlagventils 14 verschoben. Dabei verdrängt der Förderkolben 12 das Schmiermittel in der Zuteilkammer 13 in den Verteilerauslass 5 und damit über die Auslassöffnung 6 in die jeweilige Schmierstellendruckleitung 10 zu der dieser zugeordneten Schmierstelle. Dabei gibt das Rückschlagventil 14 unter Druck den Durchgang zu dem Verteilerauslass 5 frei. Sobald der Förderkolben 12 mit seinem vorderen Ende die Durchgangsöffnung 17 zu der Dosierkammer 16 überfahren hat, wird die Dosierkammer 16 unter Druck mit Schmiermittel aufgefüllt. Wie bereits erwähnt, ist der Hub des Dosierkolbens 18 von der Gewindemutter 27 begrenzt. Beim Hub fährt der Kontrollstift 30 dementsprechend weit aus der Gewindemutter 27 zur visuellen Kontrolle der Funktion des Verteilerelements 3 heraus. Wenn der Förderkolben 12 seinen Hub abgeschlossen hat, ist die dosierte Schmiermittelmenge aus der Zuteilkammer 13 in den Verteilerauslass 5 verdrängt. Danach erfolgt eine Druckentlastung des Schmiermittelzufuhrkanals 23, damit das Verteilerelement 3 umsteuern kann. Dabei fällt der Schmiermitteldruck an dem Verteilereinlass unter einen vorgegebenen Wert ab, so dass der Förderkolben 12 von der Rückstellfeder 11 in seine Ausgangsstellung zurückgeschoben wird. Dabei verhindert das Rückschlagventil 14, daß das Schmiermittel von dem Verteilerauslass 5 in die Zuteilkammer 13 zurückströmen kann. Sobald der als Passkolben ausgebildete Förderkolben 12 die Durchgangsöffnung 17 zu der Dosierkammer 16 freigegeben hat, verdrängt der federbelastete Dosierkolben 18 die dosierte Ölmenge in die Zuteilkammer 13. Entgegen dem Stand der Technik wird der Kontrollstift 30 nicht mit zurückgezogen. Das Verteilerelement 3 ist danach wieder zur nächsten Schmierung betriebsbereit; Der Kontrollstift 30 bleibt, weil er von den Dosierkolben 18 entkoppelt ist, bei Rückzug des Dosierkolbens 18 außen stehen. Die Überwachungsperson kann dann zur Überprüfung der Funktion des betreffenden Verteilerelements 3 den Kontrollstift 30 nach innen drücken und abwarten, ob er bei weiterem Betrieb wieder erscheint bzw. herausgedrückt wird.

Ersichtlich können erfindungsgemäß mehrere gleiche oder unterschiedliche Verteilerblöcke 2 der in den Fig. 1 und 2 veranschaulichten Art auf ein und derselben Grundplatte 9 angeordnet sein. Auf diese Weise ist eine sehr variable Anpassung an die Anforderungen der Zentralschmieranlage möglich, ohne dass die einfache Montage, Demontage und Wartung des Schmiermittelverteilers beeinträchtigt wird. Jeder Verteilerblock 2 bzw. Verteilerteilblock kann schnell und sicher gegen einen anderen ausgewechselt werden, wenn der Defekt eines Verteilerelements 3 festgestellt werden sollte.

### Bezugszeichenliste

- 1: Schmiermittelverteiler
- 2: Verteilerblock
- 3: Verteilerelemente
- 4: Einlasskammer
- 5: Verteilerauslass
- 6: Auslassöffnungen
- 7: Seite
- 8: Einlassöffnung
- 9: Grundplatte
- 10: Schmierstellendruckleitung
- 11: Rückstellfeder
- 12: Förderkolben
- 13: Zuteilkammer
- 14: Rückschlagventil
- 15: erste Bohrung
- 16: Dosierkammer
- 17: Durchgangsöffnung
- 18: Dosierkolben
- 19: Förderkammer
- 20: Rückstellfeder
- 21: zweite Bohrung
- 22: gegenüberliegende Seite
- 23: Schmiermittelzufuhrkanal
- 24: Gewindemutter
- 25: Gewindemutter
- 26: Rückstellfeder
- 27: Gewindemutter
- 28: Dichtungsring
- 29: Feststellmutter
- 30: Kontrollstift

## Patentansprüche

1. Schmiermittelverteiler für Einleitungs-Zentralschmieranlagen für die Dosierung von Schmierölen, mit wenigstens einem z.B. leistenförmigen ein- oder mehrteiligen Verteilerblock (2) und einer vorgegebenen Anzahl von Verteilerelementen (3) mit einem Gehäuse mit einem Verteilereinlass für den Anschluss einer Pumpendruckleitung und einem Verteilerauslass (5) für den Anschluss einer Schmierstellendruckleitung, wobei die Gehäuse der Anzahl von Verteilerelementen (3) gemeinsam von dem Verteilerblock (2) gebildet sind und sich die Verteilerauslässe (5) der Anzahl von Verteilerelementen (3) in Auslassöffnungen (6) in ein und derselben Seite (7) des Verteilerblocks (2) münden, mit welcher Seite (7) der Verteilerblock (2) unter Abdichtung der Schmiermittelübergänge an einer Grundplatte (9) mit den Auslassöffnungen (6) zugeordneten Schmierstellendruckleitungen (10) anliegend befestigbar ist, **dadurch gekennzeichnet, dass** jedes Verteilerelement (3) einen gegen die Wirkung einer Rückstellfeder (11) von dem Arbeitsdruck der Pumpendruckleitung betätigbaren Förderkolben (12), eine Zuteilkammer (13) für die an den Verteilerauslass (5) jeweils abzugebende Schmierstoffteilmenge und ein Rückschlagventil (14) zwischen der Zuteilkammer (13) und dem Verteilerauslass (5) aufweist, sowie der Förderkolben (12), die Zustellkammer (13) und das Rückschlagventil (14) jeweils von einer ggf. abgestuften ersten Bohrung (15) des gemeinsamen Verteilerblocks (2) aufgenommen bzw. gebildet sind bzw. ist.

2. Schmiermittelverteiler nach Anspruch 1, **dadurch gekennzeichnet, dass** eine Einlassöffnung (8) eines vorzugsweise allen Verteilerelementen (3) des Verteilerblocks (2) gemeinsamen Schmiermittelzufuhrkanals (23) für die in dem Verteilerblock (2) als gemeinsames Gehäuse integrierten Verteilerelemente (3) in derselben Seite (7) des Verteilerblocks (2) liegt wie die Auslassöffnungen (6) der Verteilerelemente (3) und die Grundplatte (9) mit einer zugeordneten Pumpendruckleitung ausgestattet ist.

3. Schmiermittelverteiler nach Anspruch 1 oder 2, **dadurch gekennzeichnet, dass** die Schmierstellendruckleitungen (10) und/oder die Pumpendruckleitung als Durchgangskanäle bzw. Durchgangskanal der Grundplatte (9) ausgebildet sind.

4. Schmiermittelverteiler nach einem der Ansprüche 1 bis 3, **dadurch gekennzeichnet, dass** die erste Bohrung (15) als Durchgangsbohrung ausgebildet ist.

5. Schmiermittelverteiler nach Anspruch 4, **dadurch gekennzeichnet, dass** die Durchgangsbohrungen der Anzahl von Verteilerelementen (3) parallel zueinander und parallel zu der die Auslassöffnungen (6) aufweisenden Seite (7) des Verteilerblocks (2) liegen.

6. Schmiermittelverteiler nach einem der vorhergehenden Ansprüche, **dadurch gekennzeichnet, dass** jedes Verteilerelement (3) eine Dosierkammer (16) mit einer Durchgangsöffnung (17) zu der Zuteilkammer (13) und einen die Dosierkammer (16) einseitig begrenzenden Dosierkolben (18) aufweist, welcher unter dem in einer Förderkammer (19) des Förderkolbens (12) herrschenden Arbeitsdruck des Schmiermittels gegen die Wirkung einer Rückstellfeder (20) elastisch ausweicht, und dass die Durchgangsöffnung (17), die Dosierkammer (16) und der Dosierkolben (18) von einer ggf. abgestuften zweiten Bohrung (21) des Verteilerblocks (2) gebildet bzw. aufgenommen sind bzw. ist.

7. Schmiermittelverteiler nach Anspruch 6, **dadurch gekennzeichnet, dass** die zweite Bohrung (21) als Querbohrung zu der ersten Bohrung (15) ausgebildet ist.

8. Schmiermittelverteiler nach Anspruch 6 oder 7, **dadurch gekennzeichnet, dass** die zweite Bohrung (21) von der der die Auslassöffnungen (6) aufweisenden Seite (7) gegenüberliegenden Seite (22) in den Verteilerblock (2) führen.

9. Schmiermittelverteiler nach einem der Ansprüche 1 bis 8, **dadurch gekennzeichnet, dass** mehrere gleiche oder unterschiedliche Verteilerblöcke (2) auf ein und derselben Grundplatte (9) angeordnet sind.

10. Schmiermittelverteiler nach einem der vorhergehenden Ansprüche, **dadurch gekennzeichnet, dass** ein von dem Dosierkolben (18) nach außen schiebbarer Kontrollstift (30) von dem Dosierkolben (18) entkoppelt und von Hand zurückschiebbar ist.

## Claims

1. Oil distributor for single line, central lubricating systems for the metering of lubricant oils, with at least one e.g. strip-like one-piece or multi-piece distributor block (2) and a prespecified number of distributor elements (3) with a housing, with a distributor inlet for connection of a pump pressure line and a distributor outlet (5) for connection of a lubricant point pressure line, where the housings of the number of distributor elements (3) are formed jointly by the distributor block (2), and the distributor outlets (5) of the number of distributor elements (3) open into outlet openings (6) in one and the same side (7) of the distributor block (2), to which side (7) the distributor block (2) can be attached sealing the lubricant transitions lying against a base plate (9) with lubricant pressure lines (10) allocated to the outlet openings (6), **characterised in that** each distributor element (3) has a delivery plunger (12) which can be activated against the effect of a return spring (11) by the working pressure of the pump pressure line, a feed chamber (13) for the lubricant part quantity to be output to the distributor outlet (5) concerned, and a non-return valve (14) between the feed chamber (13) and the distributor outlet (5), and the delivery plunger (12), feed chamber (13) and non-return valve (14) are each held or formed by a first bore (15), where applicable stepped, of the common distributor block (2).

2. Oil distributor according to claim 1, **characterised in that** an inlet opening (8) of a lubricant supply channel (23) preferably common to all distributor elements (3) of the distributor block (2), for the distributor elements (3) integrated in the distributor block (2) as a common housing, lies in the same side (7) of the distributor block (2) as the outlet openings (6) of the distributor elements (3) and the base plate (9) is equipped with an allocated pump pressure line.

3. Oil distributor according to claim 1 or 2, **characterised in that** the lubricant point pressure lines (10) and/or the pump pressure line are formed as through channels or a through channel of the base plate (9).

4. Oil distributor according to any of claims 1 to 3, **characterised in that** the first bore (15) is formed as a through bore.

5. Oil distributor according to claim 4, **characterised in that** the through bores of the number of the distributor elements (3) run parallel to each other and parallel to the side (7) of the distributor block (2) with the outlet openings (6).

6. Oil distributor according to any of the previous claims, **characterised in that** each distributor element (3) has a metering chamber (16) with a through opening (17) to the feed chamber (13) and a metering piston (18) delimiting the metering chamber (16) on one side, which deviates elastically under the oil working pressure predominating in a delivery chamber (19) of the delivery plunger (12) against the effect of a return spring (20), and that the through opening (17), the metering chamber (16) and the metering piston (18) are formed or held by a second bore (21), where applicable stepped, of the distributor block (2).

7. Oil distributor according to claim 6, **characterised in that** the second bore (21) is formed as a transverse bore to the first bore (15).

8. Oil distributor according to claim 6 or 7, **characterised in that** the second bore (21) leads from the side (22) opposite the side (7) having the outlet openings (6) into the distributor block (2).

9. Oil distributor according to claim 1 or 8, **characterised in that** several distributor blocks (2), the same or different, are arranged on one and the same base plate (9).

10. Oil distributor according to any of the previous claims, **characterised in that** a control pin (30) which can be moved outwards by the metering piston (18) is decoupled from the metering piston (18) and can be pushed back by hand.

## Revendications

1. Répartiteur d'huile pour des installations de lubrification centralisées à introduction pour le dosage d'huiles de lubrification, ayant au moins un bloc répartiteur (2) en une ou plusieurs pièces, par exemple en forme de baguette, et un nombre prédéterminé d'éléments répartiteurs (3) avec un boîtier ayant une admission de répartiteur pour le raccordement à une conduite de pression de pompe et avec une sortie de répartiteur (5) pour le raccordement d'une conduite de pression pour des emplacements de lubrification, les boîtiers de tous les éléments répartiteurs (3) étant formés en commun avec le bloc répartiteur (2) et les sorties de répartiteurs (5) du nombre des éléments répartiteurs (3) débouchant dans des ouvertures de sortie (6) situées dans un et même côté (7) du bloc répartiteur (2), côté (7) avec lequel le bloc répartiteur (2) peut être fixé à des conduites de pression pour emplacements de lubrification associées aux ouvertures de sortie (6) par application avec étanchéité des passages de lubrifiant au niveau d'une plaque de base (9) **caractérisé en ce que** chaque élément répartiteur (3) est muni d'un piston de transport (12) pouvant être actionné par la pression de travail de la conduite de pression de pompe contre l'effet d'un ressort de rappel (11), d'une chambre de distribution (13) pour la quantité de lubrifiant à distribuer à chaque sortie de répartiteur (5) et d'une valve antiretour (14) entre la chambre de distribution (13) et la sortie de répartiteur (5), et **en ce que** le piston de transport (12), la chambre de distribution (13) et la valve antiretour (14) sont ou est chacun reçu(s) dans ou formé(s) par un premier trou (15), le cas échéant en escalier, du bloc répartiteur (2) commun.

2. Répartiteur d'huile selon la revendication 1, **caractérisé en ce qu'**une ouverture d'admission (8) d'un canal d'alimentation en lubrifiant (23), de préférence commun à tous les éléments répartiteurs (3) du bloc répartiteur (2), pour les éléments répartiteurs (3) intégrés dans le bloc répartiteur (2) servant de boîtier commun est placée sur le même côté (7) du bloc répartiteur (2) que les ouvertures de sortie (6) des éléments répartiteurs (3), et **en ce que** la plaque de base (9) est munie d'une conduite de pression de pompe associée.

3. Répartiteur d'huile selon la revendication 1 ou 2, **caractérisé en ce que** les conduites de pression pour des emplacements de lubrification (10) et / ou la conduite de pression de pompe sont formées pour servir de canaux de passage ou de canal de passage de la plaque de base (9).

4. Répartiteur d'huile selon l'une des revendications 1 à 3, **caractérisé en ce que** le premier trou (15) est formé pour servir de canal de passage.

5. Répartiteur d'huile selon la revendication 4, **caractérisé en ce que** les trous de passage du nombre des éléments répartiteur (3) sont placés parallèlement entre eux et parallèlement au côté (7) du bloc répartiteur (2) muni des ouvertures de sortie (6).

6. Répartiteur d'huile selon l'une des revendications précédentes, **caractérisé en ce que** chaque élément répartiteur (3) est muni d'une chambre de dosage (16) avec une ouverture de passage (17) vers la chambre de distribution (13) et d'un piston de dosage (18) limitant un côté de la chambre de dosage (16), ledit piston de dosage reculant de façon élastique contre l'effet du ressort de rappel (20) sous l'effet de la pression de travail du lubrifiant régnant dans une chambre d'alimentation (19) du piston de transport (12), et **en ce que** l'ouverture de passage (17), la chambre de dosage (16) et le piston de dosage (18) sont ou est chacun reçu(s) dans ou formé(s) par un deuxième trou (21), le cas échéant en escalier, du bloc répartiteur (2).

7. Répartiteur d'huile selon la revendication 6, **caractérisé en ce que** le deuxième trou (21) a la forme d'un trou transversal à la direction du premier trou (15).

8. Répartiteur d'huile selon la revendication 6 ou 7, **caractérisé en ce que** le deuxième trou (21) mène au côté (22) du bloc répartiteur (2) opposé au côté (7) muni des ouvertures de sortie (6).

9. Répartiteur d'huile selon l'une des revendications 1 à 8, **caractérisé en ce que** plusieurs blocs répartiteurs (2) identiques ou différents sont disposés sur une et même plaque de base (9).

10. Répartiteur d'huile selon l'une des revendications précédentes, **caractérisé en ce qu'**une tige de contrôle (30) pouvant être poussée vers l'extérieur par le piston de dosage (18) est découplée du piston de dosage (18) et peut être repoussée manuellement.
